# EUROPEAN PATENT SPECIFICATION

(11) **EP 0 351 103 B1**
(45) Date of publication and mention of the grant of the patent: **27.10.1993**
(21) Application number: 89306625.8
(22) Date of filing: 29.06.1989
(51) Int. Cl.: G06K 7/06

(54) **Card reader**
Kartenabtaster
Lecteur de carte

(30) Priority: 13.07.1988 GB 8816613
(43) Date of publication of application: 17.01.1990
(73) Proprietor: NOKIA MOBILE PHONES (U.K.) LIMITED, Camberley, Surrey GU15 3SP (GB)
(72) Inventor: Charman, Neil John, College Town Camberley Surrey, GU15 4YA (GB); Harrup, Anthony Barry, Byfleet Weybridge Surrey, KT14 7EN (GB)
(74) Representative: Frain, Timothy John

(56) References cited:
- EP-A- 0 234 654
- EP-A- 0 263 746
- GB-A- 2 198 595

## Description

This invention relates to a card reader for reading a card comprising information storage means and contact pads connected thereto which enable stored information to be read from the card.

The card may be, for example, a so-called "smart card" which is usually slightly thicker than a conventional plastic credit card and which includes an integrated circuit device, commonly referred to as a "chip" in which information is stored. For this reason such cards are also often known as "chip cards". The integrated circuit or chip is connected to contact pads on the card and these contact pads are engaged by contacts in the card reader to enable the card to be read.

Prior art card readers are known which have either an externally opening drawer or an internal carriage for receiving a card to be read. In the former case the drawer may be closed manually to move the card into a card reading position within the reader. In the latter case, the action of inserting the card causes the carriage to slide forward within the reader thus bringing the card into the position where it can be read. Conventionally, electrical contacts, for example in the form of leaf springs, are mounted on the drawer or carriage, and a mechanism is provided by means of which these contacts engage the contact pads on the card, at least when the card is in the card reading position. Since the contacts are generally mounted on the drawer or carriage, which is movable, it is usual for the contacts to have a flexible/extensible connection to circuitry in the main chassis of the card reader, although a separate - e.g. a plug and socket type - arrangement could be envisaged as a possible alternative. The flexible/extensible connection is conventionally realised using a ribbon cable, but this occupies appreciable space, especially as it must not impede the free movement of the carriage or drawer and so is not conducive to an ultra-compact design.

A card reader of the external drawer type is disclosed in GB-A-2 198 595 in which the contacts are mounted on the chassis and in which the card-carrying drawer is urged by ramp action to press the card contacts against the chassis contacts. The card is not bent and hence no contact force is derived from the card resilience.

A card reader having the features recited in the pre-characterizing portion of claim 1 below is known from European published patent application EP-A-0,230,674; in particular the embodiment described with reference to Figures 11 to 13 therein. In that case the card reader employs an internal carriage having a card support member in the form of a flexible, spring tongue. A protrusion is present on the underside of the spring tongue which engages and rides up an abutment on the base of the main chassis of the reader as the carriage is moved into the card reading position. This causes the tongue to be flexed upwardly and so move the card towards electrical contacts which are mounted on the carriage. Although not described explicitly, it would appear from the drawings that the contacts are connected by a flexible connection, e.g. a ribbon cable, to the main circuitry in the card reader, as is conventional. Also, it would seem from the drawings (although again this is not mentioned in the text) that the leading portion of the card itself may be flexed upwardly towards the contact pads since the trailing portion appears to be restrained against downward movement by slots at the entrance of the carriage and/or the card reader. However, the arrangement is such that it is only the spring tongue in its cammed position which holds the card against the contacts. Any consequential spring effect caused by the (incidental) bending of the card will merely tend to urge the trailing portion of the card against the bottom part of the entrance to the insert slots. In other words, the resilience of the card in its bent configuration is not exploited to enhance the electrical connection between the contact pads on the card and the contacts on the carriage.

According to the present invention a card reader is characterised in that the contacts (13a) are provided on the chassis (2), and in that the card reader further comprises camming means (2a,2b) operable during card insertion to move the carriage towards the contacts in a direction transverse to the direction of card insertion, and abutment means (4) spaced from and upstream of the carriage (in the direction of card insertion), wherein the movement of the carriage to the card reading position presses the card against said abutment means causing the card to bend and thereby urge the contact pads on the card into engagement with the contacts on the chassis when the carriage is in the card reading position.

By contrast with the card reader disclosed in the aforementioned EP-A-0,230,674, a card reader in accordance with the invention has the contacts mounted on the main chassis rather than on the carriage. These contacts are thus stationary relative to the chassis and this dispenses with the need for a flexible electrical connection. This is advantageous since a fixed electrical connection can be realised in less space than is required by the flexible or extensible connections of the prior art.

Furthermore, it has to be noted that in the present card reader camming means are operable to move the carriage as a whole (without disturbing its integrity) towards the contacts in a direction transverse to the direction of card insertion. This is in marked contrast with the prior art card reader discussed above where a part of the carriage itself is deformed as a result of card insertion. In the present invention it is the card only - and not the carriage or any part of it - which is deformed during operation of the card reader.

Also, in the present invention the arrangement of the carriage and abutment means against which the card is pressed is such that when the card is bent towards the contacts in the card reading position the leading portion of the card is positively urged towards the contacts on the chassis, thus improving the electrical connection between the contact pads on the card and the contacts on the chassis.

A card reader in accordance with the invention has the advantage that it can be very compact and especially very slim indeed without impairing reliability of operation. For example, the overall height (thickness) of the card reader may be as little as 5mm, which is significantly less than the 17mm dimension more usual for prior art card readers. This achievement of greater compactness is all the more remarkable since known means for reliably transporting the card into a reading position, for making satisfactory electrical connections between the contacts in the reader and the contact pads on the card, and for operating the reader when the card is in its reading position, have occupied an amount of space which was generally believed to have reached a limit for miniaturization.

A card reader in accordance with the present invention also has the advantage that there is substantially no risk of damaging the card or the contacts when using the card reader since the contacts can be spaced apart from the card whenever there is any sliding movement of the card relative to the contacts. Moreover, embossed cards can be used without any problem. Also, a card that is distorted or bent, but which can still be inserted into the card reader, can still be read.

Additionally, it is noted that the design of the present card reader is electrically and mechanically relatively simple, which facilitates manufacture and so reduces expense.

Preferably, the abutment means is a member defining a card bearing surface which, together with the carriage, supports the card in an undeformed state in the card receiving position and which ensures that the card is guided smoothly into the carriage during insertion into the card reader.

The contacts on the chassis are preferably supported by a plinth spaced from the plane of the card bearing surface when the carriage is in its card receiving position. The card is thereby spaced from contacts supported by the plinth when it is initially received in the carriage but is deformed into contact with the plinth in the card reading position.

The chassis is preferably provided with guide means, such as a pair of lazy Z-shaped slots or grooves at each side of the carriage, for guiding the carriage translationally in the direction of card insertion and for deflecting (camming) the carriage transversely during its lateral movement. This deflection causes part of the carriage to urge a respective part of the card towards the plinth and hence make the electrical connections between the contact pads on the card and the contacts supported by the plinth. This deformation of the card not only enables such electrical connection to be made but also causes certain forces to act which assist with card retention. Moreover, by moving the card into engagement with the reading contacts on the chassis, the latter contacts can be fixed in the chassis as already mentioned.

The carriage and the abutment means are preferably provided with bevelled forward edges to facilitate receipt of the card.

Preferably the carriage or chassis has a deflectable member like a cantilever which is integral with the body of the carriage or the chassis respectively and which is deflected by the card on insertion into the reader. When the carriage moves into the card reading position the deflectable member clamps the card against the body of the carriage to assist with card retention.

Embodiments of the invention will now be described, by way of example, with reference to the accompanying drawings in which:-
Figure 1 is a cross-section of a card reader in accordance with the invention, showing a carriage in an initial card receiving position,
Figure 2 is a cross-section of the card reader in Figure 1, showing the carriage in a card reading position,
Figure 3 is a side elevation of the card reader showing the mechanism for moving the carriage between the card receiving position and the card reading position,
Figures 4a and 4b are cross-sections of part of the card reader in Figures 1 and 2 showing the contacts in the card receiving and the card reading positions respectively,
Figure 5 is a cross-section of a further embodiment of a card reader in accordance with the invention, showing the carriage in the card receiving position, and
Figure 6 is a cross-section of the card reader in Figure 5, showing the carriage in the card reading position.

In the various Figures the same reference numerals are used to designate like parts.

It is noted here that, for the sake of clarity, the Figures are not drawn to scale. In particular the dimensions are exaggerated in the height direction, i.e. in the direction of card thickness.

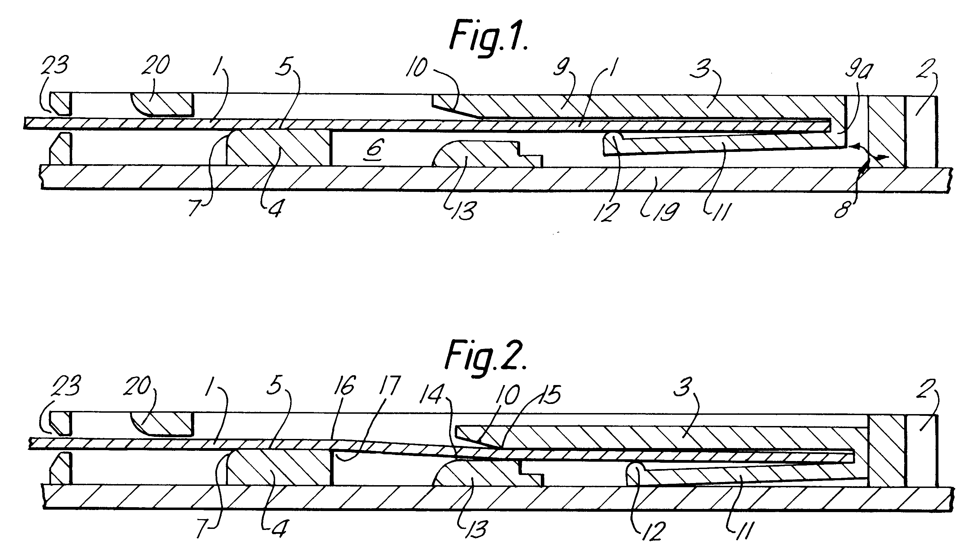

In a first embodiment of the invention, see Figures 1 to 4, a "smart card" 1 can be inserted into a card reader through an entrance slot 23 therein. The card reader comprises a chassis 2 and a carriage 3 arranged for slidable movement in the chassis. The chassis 2 defines a main card receiving slot 6 and is mounted on a platform 19, which in practice may be a printed circuit board on which is mounted the circuitry for reading the information stored in the integrated circuit in the smart card 1. Referring particularly to Figure 1, an abutment member 4 having an upper card bearing surface 5 is upstanding in the slot 6 in which the carriage 3 is slidably mounted. The abutment member 4 is disposed upstream of the carriage taken in the direction of card insertion. An outer edge 7 of member 4 is radiused or bevelled to guide the card 1 smoothly onto surface 5 when the card is inserted through the slot 23. A further abutment member 20, which depends from the top of chassis 2, is located between the slot 23 and upstanding member 4. Like member 4, the member 20 also has a card bearing surface (this time on its underside) and a bevelled or radiused front edge so as to guide a card during insertion through the slot defined between members 4 and 20.

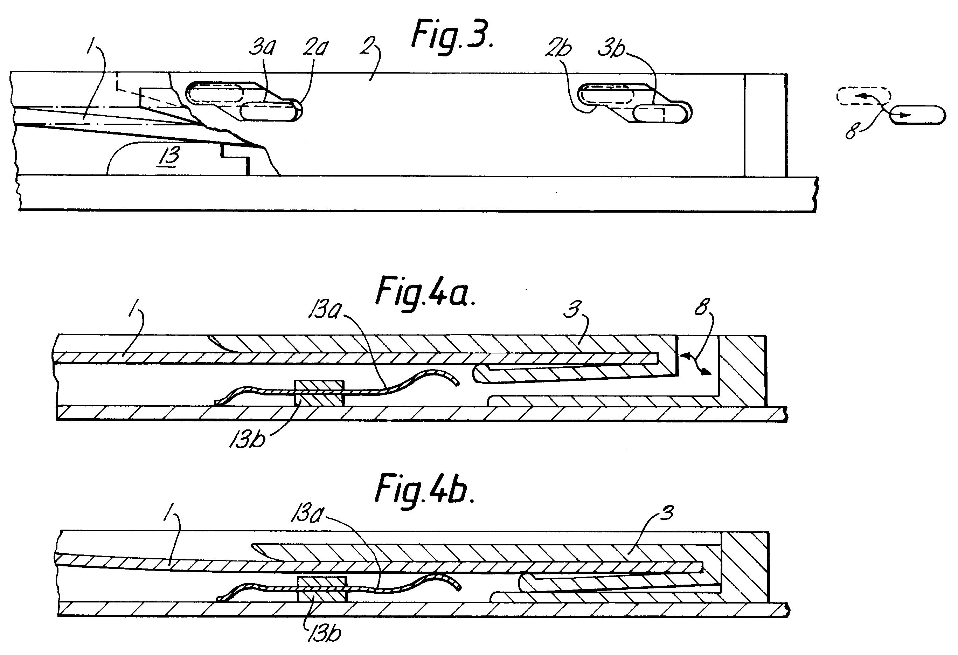

Referring to Figure 3, each side of the carriage 3 has a pair of integral projections 3a,3b accommodated in respective complementary slots or grooves 2a,2b on the chassis sides. The slots or grooves 2a,2b provide a lazy Z shape and have a camming action to guide the carriage 3 in a lazy Z-shaped path as indicated by the arrows 8 and resulting in the carriage moving from the position shown in Figure 1 to the position shown in Figure 2. In Figure 3 the carriage is shown in solid lines in the card reading position (corresponding to Figure 2), and in broken lines in the initial card receiving position (corresponding to Figure 1). The movement of the carriage is described in more detail below.

Carriage 3 has a substantially rigid top portion 9 with a bevelled edge 10 to facilitate card insertion. It also has a cantilevered finger 11 on its underside with a lip or protuberance 12 at its free end. As card 1 is inserted into the reader it is guided smoothly between members 20 and 4 over the bearing surface 5 and into the carriage 3 whereby the cantilevered finger 11 is slightly deflected to accommodate the card.

A plinth 13, which is also upstanding in the card receiving slot 6 in the vicinity of the carriage has an upper surface 14 which is a predetermined distance lower than the surface 5 with respect to the floor of slot 6 and the underside of the card 3. In the position shown in Figure 1, card 1 is spaced apart from surface 14. A plurality of fixed contacts (not shown) may be mounted on plinth 13 so that they will be opposite the contact pads (not shown) on card 1 when it is in the card reading position shown in Figure 2. Alternatively, and more preferably, fixed leaf spring contacts 13a project from plinth 13b, in the manner of cantilevers, as shown in Figures 4a and 4b. Plinth 13b may be integral with plinth 13 or it may be a discrete member, separate from plinth 13. These contacts are preferred because they are configured so that their free ends extend above the upper surface 14 of the plinth 13b, i.e. in a resting state, as shown in Figure 4a. They are then resiliently deflected by the card 1 when the card is moved into the card reading position, as shown in Figure 4b. This ensures that good electrical contacts are made.

Carriage 3 may be biassed by a return spring (not shown) in the direction of the card receiving slot. A suitable leaf spring configuration for this application is disclosed in our co-pending British patent application No. 8902949 (our ref: PAT 89001) filed on 9 February 1989, and also (more briefly) in our co-pending European patent application No. 8801097 (our ref: PAT 88001) filed on 19 January 1989.

In operation, the card 1 is inserted through the slot 23, between abutment members 20 and 4 and onto the card bearing surface 5. Additional members (not shown) providing card bearing surfaces may be arranged in sequence between the card insertion slot 23 and the carriage 3. The card slides over the bearing surface 5 towards the carriage 3 and into a recess between members 9 and 11 of the carriage 3. Member 11 is slightly deflected and thus provides a slight gripping pressure to prevent the card from being loosely located in the carriage 3. The leading edge of the card eventually abuts a backstop 9a of the carriage so that further insertion of the card 1 causes the carriage 3 to move away from the insertion slot 23 and in the direction shown by arrow 8. The guide slots 2a,2b in the chassis 2 (see Figure 3) cause carriage 3 to move in a lazy Z-shaped path whereby a corner 15 of the bevelled edge 10 on member 9 presses against the back of the card in the region opposite the contact pads (which are on the other face) The lowermost face of the card 1 in this region is therefore forced downwardly towards part of the upper surface 14 of plinth 13, i.e. towards the card reading contacts 13a. Furthermore, another region 16 of the card 1 is urged against the guide surface 5 of abutment member 4 in such manner that the card is caused to bend at the corner 17 of member 4 facing the carriage 3. Member 20 and the upper portion defining the entrance slot 23 maintain the trailing portion of the card in a substantially flat attitude. However, the effect of the bend in the card at corner 17 of member 4 is to exert a downward spring-like force on the leading portion of the card which is thus moved downwardly in cantilever fashion. Good electrical connections are thereby made between the contact pads on the card and the card reading contacts 13a.

As the card moves into the position shown in Figure 2, it causes an actuator (not shown) of a switch (not shown) to move into a position for energising the electronic circuitry which is provided, e.g. on the printed circuit board 19, for reading the information stored on card 1. A suitable actuator and switch arrangement for this application is disclosed and claimed in our aforementioned co-pending British patent application NO. 8902949.

In the card reading position shown in Figure 2, the free end of the cantilevered finger 11 abuts the floor of slot 6 and is therefore urged upwardly against the under surface of card 1. This helps to retain the card firmly in the slot. Hence, the corner of the bevelled edge 15 clamps the card against the surface 14 of plinth 13; the lip 12 of cantilevered finger 11 clamps the card against the body of the carriage 3; and the projections 3a,3b on the side of the carriage 3 are consequently urged upwards against the top defining wall of the bottom limb of the Z-shaped slots or grooves 2a,2b in the chassis walls. The resultant effect of the various forces acting on the carriage and the card in the card reading position not only helps to hold the card firmly in the carriage, but also enables the carriage (and hence the card) to be retained quite firmly in the card reading position against the action of the return spring (mentioned above, but not shown in the Figures) without the need for any other retention, detent, or locking means. This is clearly a significant advantage and, furthermore, after use, the card can be released simply by gently pulling the card out of the card reader. As soon as a pulling force is exerted the carriage is caused to move in the contrary direction along the lazy Z-shaped path 8 determined by the slots or grooves 2a,2b and the return spring becomes effective to help return the carriage and the card therein to the starting position, i.e. the card receiving position, whereat the card can readily be withdrawn completely from the card reader.

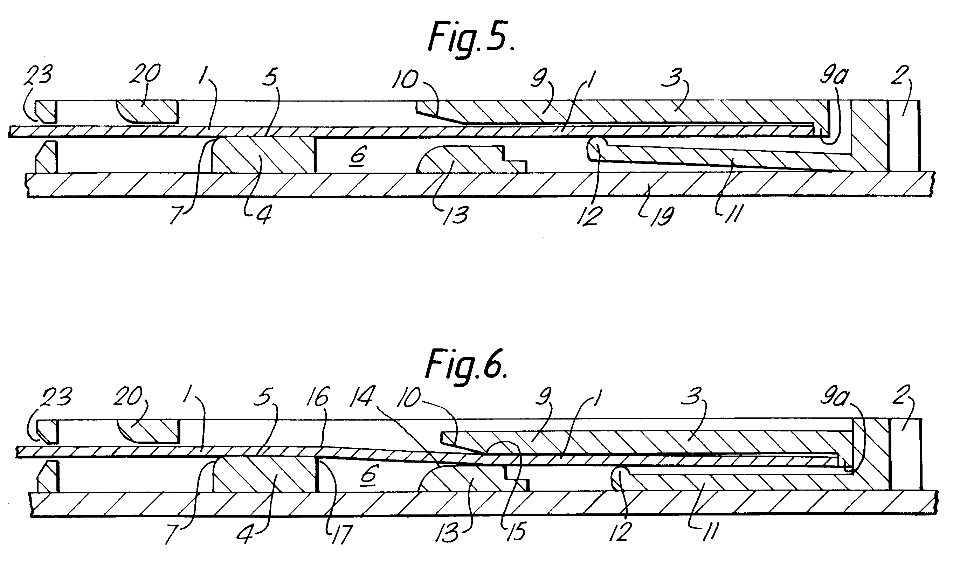

A slightly modified version of the card reader embodiment just described is shown in Figures 5 and 6, in which a cantilevered finger 21 with lip 22 is provided integrally with the chassis 2. (This replaces the finger 11 integral with the carriage 3 in Figure 1). Figure 5 shows the initial situation as a card is just inserted into the card reader, and Figure 6 shows the situation with the card fully inserted into the card reading position. In this latter position the lip 22 of finger 21 clamps the card firmly against the underside of the carriage 3, in a similar manner as before. In all other respects the card reader is exactly the same as already described.

In view of the foregoing description it will be evident to a person skilled in the art that various modifications may be made without departing from the scope of the invention as defined by the claims. For example, the abutment member 4 and/or the member 20 and/or the members defining the entrance slot 23 may be integral with the chassis 2, or may be formed separately therefrom, and in particular may be formed as a separate unitary member which is simply assembled relative to the chassis in the location as shown in the Figures.

## Claims

1. A card reader for reading a card (1) comprising information storage means and contact pads connected thereto which enable stored information to be read from the card, the card reader comprising a chassis (2) which supports a card receiving carriage (3) adapted for slidable movement between a card receiving position and a card reading position, said movement being due to card insertion, and a plurality of contacts (13a) for engaging the contact pads on the card to enable electrical connections to be made for reading the information from the card, characterised in that the contacts (13a) are provided on the chassis (2), and in that the card reader further comprises camming means (2a,2b) operable during card insertion to move the carriage towards the contacts in a direction transverse to the direction of card insertion, and abutment means (4) spaced from and upstream of the carriage -in the direction of card insertion-, wherein the movement of the carriage to the card reading position presses the card against said abutment means causing the card to bend and thereby resiliently urge the contact pads on the card into engagement with the contacts on the chassis when the carriage is in the card reading position.

2. A card reader as claimed in claim 1, wherein the abutment means (4) provides a bearing surface (5) for supporting and guiding the card during card insertion.

3. A card reader as claimed in claim 1 or claim 2, wherein a guide member (20) is provided downstream of the abutment means -in the direction of card insertion- on the side of the card opposite the abutment means, whereby the card passes between the guide member (20) and the abutment means (4) during card insertion.

4. A card reader as claimed in any of the preceding claims, wherein the camming means is arranged to guide the carriage along a substantially Z-shaped path (8).

5. A card reader as claimed in claim 4, wherein the carriage comprises projecting members (3a,3b) on opposite sides thereof, and the camming means comprise Z-shaped slots or grooves (2a,2b) in side walls of the chassis (2), in which slots or grooves the respective projecting members (3a,3b) are located.

6. A card reader as claimed in any preceding claim, wherein the card reader comprises further abutment means (13) disposed in the vicinity of the carriage on the side of the card remote therefrom, wherein the movement of the carriage to the card reading position causes the opposed major surfaces of the card to bear against the carriage and the further abutment means respectively.

7. A card reader as claimed in any preceding claim, wherein the contacts (13a) are supported by a plinth (13b) spaced from the abutment means (4), said contacts being spaced from the contact pads on the card when the carriage is in the card receiving position.

8. A card reader as claimed in claim 7, wherein the plinth (13b) is formed by or is integral with the further abutment means (13).

9. A card reader as claimed in any preceding claim, wherein the carriage or the chassis has a deflectable member (11,21) which is biased towards the body of the carriage and which, when the carriage is in the card reading position, acts to clamp the card against the carriage and to assist in retaining both the card and the carriage in the card reading position.

10. A card reader as claimed in any preceding claim, and further including actuating means arranged to activate circuitry for reading the card only when the card is in the card reading position.

## Patentansprüche

1. Kartenabtaster zum Abtasten einer Karte (1) mit einer Informationsspeichereinrichtung und daran befestigten Kontaktflecken, die es ermöglichen, daß gespeicherte Informationen von der Karte abgelesen werden, wobei der Kartenabtaster ein Chassis (2), das einen Kartenaufnahmeschlitten (3) hält, der verschieblich zwischen einer Kartenaufnahmeposition und einer Kartenabtastposition bewegbar ist, wobei die Bewegung infolge des Einführens der Karte erfolgt, und mehrere Kontakte (13a) aufweist, die an den Kontaktflecken auf der Karte anliegen, um elektrische Verbindungen zum Abtasten der Information von der Karte herzustellen,
**dadurch gekennzeichnet,**
daß die Kontakte (13a) an dem Chassis (2) angeordnet sind und daß der Kartenabtaster außerdem eine Nockeneinrichtung (2a, 2b), die während des Einführens der Karte wirksam wird, indem sie den Schlitten gegen die Kontakte in einer Richtung quer zu der Richtung der Karteneinführung bewegt, und eine Auflagereinrichtung (4) aufweist, die stromaufwärts von dem Schlitten -in Richtung des Karteneinschubs- beabstandet ist, wobei die Bewegung des Schlittens in die Kartenabtastposition die Karte gegen die Auflagereinrichtung preßt, wodurch die Karte gebogen und dabei die Kontaktflecken auf der Karte elastisch in Anlage an die Kontakte an dem Chassis gedrückt werden, wenn sich der Schlitten in der Kartenabtastposition befindet.

2. Kartenabtaster nach Anspruch 1, wobei die Auflagereinrichtung (4) eine Lagerfläche (5) zum Halten und Führen der Karte während des Karteneinschubs bildet.

3. Kartenabtaster nach Anspruch 1 oder 2, wobei ein Führungsteil (20) stromabwärts der Auflagereinrichtung -in Richtung des Karteneinschubs- an der Seite der Karte entgegengesetzt der Auflagereinrichtung angeordnet ist, wobei die Karte zwischen dem Führungsteil (20) und der Auflagereinrichtung (4) während des Karteneinschubs durchtritt.

4. Kartenabtaster nach jedem vorhergehenden Anspruch, wobei die Nockeneinrichtung so ausgebildet ist, daß sie den Schlitten entlang einer im wesentlichen Z-förmigen Bahn (8) führt.

5. Kartenabtaster nach Anspruch 4, wobei der Schlitten vorspringende Teile (3a, 3b) an seinen gegenüberliegenden Seiten aufweist und die Nockeneinrichtung Z-förmige Schlitze oder Nuten (2a, 2b) in Seitenwänden des Chassis (2) enthält, wobei in den Schlitzen oder Nuten die jeweiligen vorspringenden Teile (2a, 3b) angeordnet sind.

6. Kartenabtaster nach jedem vorhergehenden Anspruch, wobei der Kartenabtaster ferner eine Auflagereinrichtung (13) aufweist, die in der Nähe des Schlittens an der Seite der Karte entfernt von diesem angeordnet ist, wobei die Bewegung des Schlittens in die Kartenabtastposition bewirkt, daß die gegenüberliegenden Hauptflächen der Karte gegen den Schlitten und die weitere Auflagereinrichtung drücken.

7. Kartenahtaster nach jedem vorhergehenden Anspruch, wobei die Kontakte (13a) von einem Sockel (13b) gehalten sind, der von der Auflagereinrichtung (4) beabstandet ist, wobei die Kontakte von den Kontaktflecken auf der Karte beabstandet sind, wenn sich der Schlitten in der Kartenaufnahmeposition befindet.

8. Kartenabtaster nach Anspruch 7, wobei der Sockel (13b) durch die weitere Auflagereinrichtung (13) gebildet oder integral mit dieser ausgebildet ist.

9. Kartenabtaster nach jedem vorhergehenden Anspruch, wobei der Schlitten oder das Chassis ein ablenkbares Teil (11, 21) aufweist, welches in Richtung des Körpers des Schlittens gezwängt ist und welches in der Kartenabtastposition des Schlittens wirksam ist, um die Karte gegen den Schlitten zu klemmen und das Halten sowohl der Karte als auch des Schlittens in der Kartenabtastposition zu unterstützen.

10. Kartenahtaster nach jedem vorhergehenden Anspruch, ferner mit einer Betätigungseinrichtung, die die Schaltung zum Abtasten der Karte nur aktiviert, wenn sich die Karte in der Kartenabtastposition befindet.

## Revendications

1. Lecteur de carte pour lire une carte (1) comprenant des moyens de stockage d'informations et des plots de contact connectés à celle-ci qui permettent aux informations mémorisées d'être lues sur la carte, le lecteur de carte comprenant un châssis (2) qui supporte un chariot de réception de carte (3) prévu pour déplacement coulissant entre une position de réception de carte et une position de lecture de carte, ledit déplacement étant dû à l'introduction de la carte, et une multitude de contacts (13a) pour venir en contact avec les plots de contact sur la carte pour permettre aux connexions électriques d'être établies pour lire les informations qui sont sur la carte, caractérisé en ce que les contacts (13a) sont prévus sur le châssis (2) et en ce que le lecteur de carte comporte de plus un moyen de mise en prise (2a, 2b) qui peut être mis en oeuvre pendant l'introduction de la carte pour déplacer le chariot vers les contacts dans une direction transversale à la direction de l'introduction de la carte, et des moyens de butée (4) séparés et en amont du chariot dans la direction de l'introduction de la carte, dans lequel le déplacement du chariot vers la position de lecture de la carte presse la carte contre les moyens de butée amenant la carte à se courber et à pousser de ce fait de manière élastique les plots de contact sur la carte en contact avec les contacts sur le châssis lorsque le chariot est dans la position de lecture de carte.

2. Lecteur de carte selon la revendication 1, dans lequel les moyens de butée (4) procurent une surface porteuse (5) pour supporter et guider la carte pendant l'introduction de la carte.

3. Lecteur de carte selon la revendication 1 ou la revendication 2, dans lequel un élément de guidage (20) est prévu en amont du moyen de butée dans la direction de l'introduction de la carte sur le côté de la carte opposé au moyen de butée, d'où il résulte que la carte passe entre l'élément de guidage (20) et l'élément de butée (4) pendant l'introduction de la carte.

4. Lecteur de carte selon l'une quelconque des revendications précédentes, dans lequel le moyen de mise en prise est disposé pour guider le chariot suivant un trajet pratiquement en forme de Z (8).

5. Lecteur de carte selon la revendication 4, dans lequel le chariot comprend des éléments dépassant (3a, 3b) sur ses côtés opposés, et le moyen de mise en prise comprend des fentes en forme de Z ou rainures en forme de Z (2a, 2b) dans les parois latérales du châssis (2), dans lesquelles fentes ou rainures sont placés les éléments dépassant respectifs (3a, 3b).

6. Lecteur de carte selon l'une quelconque des revendications précédentes, dans lequel le lecteur de carte comprend de plus des moyens de butée (13) disposés au voisinage du chariot sur le côté de la carte distant de celle-ci, dans lequel le déplacement du chariot vers la position de lecture de carte amène des surfaces principales opposées de la carte à porter contre le chariot et l'autre moyen de butée respectivement.

7. Lecteur de carte selon l'une quelconque des revendications précédentes, dans lequel les contacts (13a) sont supportés par une plinthe (13b) séparée du moyen de butée (4), les contacts étant séparés des plots de contact sur la carte lorsque le chariot est dans la position de réception de la carte.

8. Lecteur de carte selon la revendication 7, dans lequel la plinthe (13b) est formée par ou est solidaire de l'autre moyen de butée (13).

9. Lecteur de carte selon l'une quelconque des revendications précédentes, dans lequel le chariot ou le châssis présente un élément que l'on peut dévier (11, 21) qui est sollicité vers le corps du chariot et qui, lorsque le chariot est dans la position de lecture de la carte, agit pour serrer la carte contre le chariot et pour aider à maintenir à la fois la carte et le chariot dans la position de lecture de la carte.

10. Lecteur de carte selon l'une quelconque des revendications précédentes, et comportant de plus un moyen d'actionnement prévu pour alimenter les circuits pour lire seulement la carte lorsque la carte est dans la position de lecture de la carte.
